# EUROPEAN PATENT SPECIFICATION

(11) **EP 4 335 891 B1**
(45) Date of publication and mention of the grant of the patent: **19.11.2025**
(21) Application number: 23193618.8
(22) Date of filing: 27.08.2023
(51) Int. Cl.: C08G 73/10, C08G 59/50, C08J 5/24, C08J 5/04

(54) **RESIN MATRIX COMPOSITION, PREPREG, CARBON FIBER COMPOSITE MATERIAL AND METHOD OF FORMING RESIN MATRIX**
HARZMATRIXZUSAMMENSETZUNG, PREPREG, KOHLEFASERVERBUNDWERKSTOFF UND VERFAHREN ZUR HERSTELLUNG DER HARZMATRIX
COMPOSITION DE MATRICE DE RÉSINE, PRÉIMPRÉGNÉ, MATÉRIAU COMPOSITE DE FIBRE DE CARBONE ET PROCÉDÉ DE FORMATION DE MATRICE DE RÉSINE

(30) Priority: 08.09.2022 TW 111134203
(43) Date of publication of application: 13.03.2024
(73) Proprietor: FORMOSA PLASTICS CORPORATION, Kaohsiung City (TW)
(72) Inventor: HSU, Yu-Cheng, Kaohsiung City (TW); KAO, Tang-Chun, Kaohsiung City (TW); CHEN, Hsuan-Yin, Kaohsiung City (TW); HWANG, Long-Tyan, Kaohsiung City (TW)
(74) Representative: Lang, Christian

(56) References cited:
- EP-A2- 0 262 891
- WO-A1-2020/176456
- JP-A- S63 221 122

## Description

### BACKGROUND

### Field of Invention

The disclosure relates to a resin matrix composition and a method of forming a resin matrix, and more particularly, to a resin matrix composition, a prepreg, a carbon fiber composite and a method of forming the resin matrix.

### Description of Related Art

An epoxy resin is a thermosetting resin with cross-linking network structure. The epoxy resin is widely used in various components for painting, electronic industry, aerospace industry, automobile, sports equipment, and etc. However, due to the cross-linking network structure of the epoxy resin, it exhibits defects of brittleness, fissility, poor impact resistance and etc., and it is especially obvious for the epoxy resin with great cross-linking density, such as tetra-functional epoxy resin.

Because of above defects of the epoxy resin, the epoxy resin should be toughened to improve the properties, thereby increasing applicability of the epoxy resin. Conventionally, the epoxy resin is toughened by mixing with a thermoplastic resin, and it results in thermally induced phase separation (TIPS) to the epoxy resin. Because a cross-linking reaction is performed between the epoxy resin and a curing agent during a thermal curing process, solubility of the mixed thermoplastic resin is decreased and lead to a binary phase separation. In other words, under change in thermodynamic condition such as temperature, the phase separation phenomenon often occurs. Therefore, for binary phase system, it is necessary to effectively control the complicated phase separation phenomenon; otherwise, the properties of the epoxy resin cannot be improved.

Document WO 2020/176456 A1 describes a curable epoxy composition, which comprises an epoxy resin composition, an epoxy resin curing agent and a functionalized polyetherimide, wherein the composition has good processability, good solubility, lower viscosity, good mechanical properties and great fracture toughness.

Document JP S63 221122 A describes prepregs containing epoxy resins, thermoplastic resins and other epoxy resins that can have excellent heat resistance and impact resistance.

Document EP 0 262 891 A describes a resin composition containing a thermosetting resin, a thermoplastic resin and an epoxy resin capable of dissolving the thermoplastic resin, and the resin composition permits production of a molded article excellent in heat resistance and mechanical properties.

However, there is still a need to provide a resin matrix composition and a method of forming a resin matrix to improve the properties and applicability of the epoxy resin.

### SUMMARY

An aspect of the disclosure is to provide a matrix resin composition, which includes an epoxy resin, a thermoplastic engineering plastic and a modified thermoplastic resin to control a phase separation system.

An another aspect of the disclosure is to provide a prepreg, which includes the matrix resin composition of the above aspect.

Yet another aspect of the disclosure is to provide a carbon fiber composite material, which is produced by the prepreg of the above aspect.

Yet another aspect of the disclosure is to provide a method of forming a resin matrix, which is performed by mixing the epoxy resin, the modified polyetherimide and polysulfone engineering plastic in a specific condition.

According to the aforementioned aspect, the resin matrix composition is provided, which includes an epoxy resin, a polysulfone engineering plastic, a modified polyetherimide and an amine curing agent. A ratio of amine groups of the amine curing agent to epoxy groups of the epoxy resin is 0.6 to 1.3. The modified polyetherimide is formed from a nucleophile and polyetherimide. The nucleophile has a nucleophilic group including a hydroxyl group, a sulfhydryl group, a carboxyl group and/or an amine group. Based on a weight of the epoxy resin as 100 wt%, the resin matrix composition includes 0.5 wt% to 30 wt% of the polysulfone engineering plastic and 0.5 wt% to 20 wt% of the modified polyetherimide.

According to some embodiments of the disclosure, the resin matrix composition further includes a hardening accelerator. The hardening accelerator includes an amine-based hardening accelerator, a guanamine-based hardening accelerator, an imidazole-based hardening accelerator and/or a phosphonium-based hardening accelerator.

According to some embodiments of the disclosure, the epoxy resin includes bisphenol A epoxy resin, bisphenol F epoxy resin, phenolic epoxy resin, phenol formaldehyde resin, naphthalene-based epoxy resin, aliphatic epoxy resin, dicyclopentadiene phenol epoxy resin, biphenyl epoxy resin, aminophenol, methylenedianiline, tetraglycidyl-4,4'-methylenedianiline or combinations thereof.

According to some embodiments of the disclosure, the amine curing agent includes aliphatic amine curing agent, cycloaliphatic amine curing agent, aromatic amine curing agent, dicyandiamide curing agent, amine-terminated polyether curing agent, polyaminoamide curing agent, polyamine curing agent, polyamide curing agent or combinations thereof.

Another aspect of the disclosure provides the prepreg, which includes the above resin matrix composition and a carbon fiber.

Yet another aspect of the disclosure provides the carbon fiber composite material, which is produced by performing a thermoforming process to the above prepreg.

Yet another aspect of the disclosure provides the method of forming the resin matrix. The method includes mixing an epoxy resin and a modified polyetherimide at a temperature of 90°C to 130°C to obtain a first solution; mixing the first solution and a polysulfone engineering plastic at a temperature of 100°C to 150°C to obtain a second solution; and adding an amine curing agent into the second solution to obtain the resin matrix. Based on a weight of the epoxy resin as 100 wt%, a weight of the modified polyetherimide is 0.5 wt% to 20 wt%. The modified polyetherimide is formed from a nucleophile and polyetherimide, and the nucleophile has a nucleophile including a hydroxyl group, a sulfhydryl group, a carboxyl group and/or an amine group. Based on a weight of the epoxy resin as 100 wt%, a weight of the polysulfone engineering plastic is 0.5 wt% to 30 wt%. A ratio of amine groups of the amine curing agent to epoxy groups of the epoxy resin is 0.6 to 1.3.

According to some embodiments of the disclosure, the modified polyetherimide is formed from ethylenediamine and polyetherimide.

Therefore, with the application of the resin matrix composition, the prepreg, the carbon fiber composite and the method of forming the resin matrix of the present invention, the resin matrix with binary phase separation is obtained by mixing two kinds of thermoplastic resin with the epoxy resin to have both flexibility and toughness. Further, the prepreg and the carbon fiber composite material can have better processability and physical properties.

### BRIEF DESCRIPTION OF THE DRAWINGS

The invention can be more fully understood by reading the following detailed description of the embodiment, with reference made to the accompanying drawings as follows:

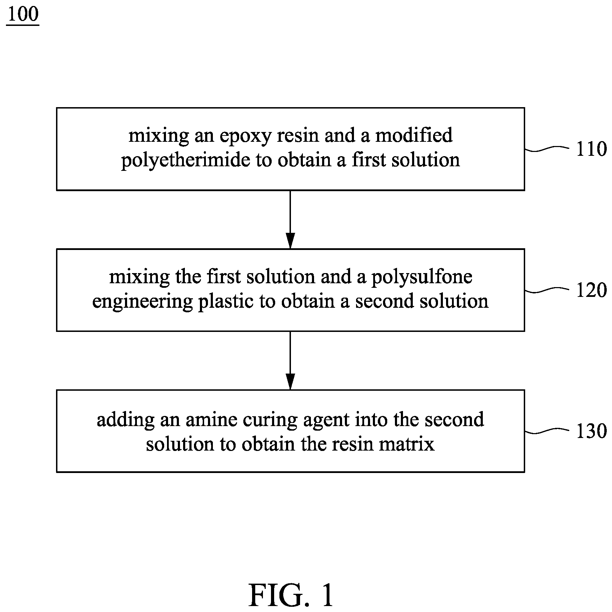

FIG. 1 illustrates a flowchart of a method of forming a resin matrix according to some embodiments of the disclosure.

### DETAILED DESCRIPTION

Conventionally, the epoxy resin is toughened by using polysulfone engineering plastic, such as polyether sulfone (PES), and then is cured by using 4.4-diaminodiphenyl sulfone (4,4-DDS) as a curing agent. In such conventional method, while adding 0 wt% to 10 wt% of the polyether sulfone, a resin matrix with homogeneity or an island phase may be obtained; while an amount of the polyether sulfone increases to 12 wt% to 16 wt%, a viscosity of the resin matrix would be changed , thereby transferring to a co-continuous phase during curing process; while the amount of polyether sulfone further increases to above 20 wt%, the resin matrix may be further transferred to an inverse-island phase. The resin matrix with the inverse-island phase appears mainly as thermoplastic condition, thus it is the toughest phase within the aforementioned three phases. However, flexural modulus and glass transition temperature (T_{g}) of the inverse-island phase decrease too much, and hence application of the resin matrix is limited. It is understood that the resin matrix with island phase (spherical phase separation) has better flexural strength, while the resin matrix with co-continuous phase has better impact resistance and toughness.

As described above, the present invention provides a resin matrix composition, which not only includes the polysulfone engineering plastic, but also includes a modified polyetherimide (PEI). The resin matrix with both the co-continuous phase and the island phase can be obtained with less amount of the polysulfone engineering plastic, thereby having both flexural strength and impact resistance. Moreover, the resin matrix can have more suitable viscosity for impregnation of carbon fiber, so the prepreg has better processability, and the carbon fiber composite material has better physical property.

The resin matrix composition of the present disclosure includes the epoxy resin, the polysulfone engineering plastic, the modified polyetherimide and an amine curing agent. In some embodiments, the epoxy resin includes bisphenol A epoxy resin, bisphenol F epoxy resin, phenolic epoxy resin, phenol formaldehyde resin, naphthalene-based epoxy resin, aliphatic epoxy resin, dicyclopentadiene phenol epoxy resin, biphenyl epoxy resin, aminophenol, methylenedianiline, tetraglycidyl-4,4'-methylenedianiline or combinations thereof.

In some examples, the bisphenol A epoxy resin may be commercial products with trademark of NPEL 127, 128, 134, 901, 902 or 904 produced by Nan Ya Plastic Corporation; commercial products with trademark of EPON TM 828, 830, 834 or 1001 F produced by Hexion Inc.; commercial products with trademark of BE 114, 186 or 188 produced by Chang Chun Plastic Corporation; commercial products with trademark of EP 4100, 4300 or 4700 produced by ADEKA Corporation; commercial products with trademark of D.E.R. 331, 317, 324 or 214 produced by Dow Chemical Company. In some examples, the bisphenol F epoxy resin may be commercial products with trademark of NPEF 170 produced by Nan Ya Plastic Corporation; commercial products with trademark of EPON TM 869 produced by Hexion Inc.; commercial products with trademark of jER 806 or 807 produced by Mitsubishi Chemical Company; commercial products with trademark of BE 170, 235 or 283 produced by Chang Chun Plastic Corporation.

In some examples, the phenolic epoxy resin may be commercial products with trademark of NPPN 630, 638 or 640 produced by Nan Ya Plastic Corporation; commercial goods of H series or HF series produced by Meiwa Plastic Industries; commercial products with trademark of PNE 171, 172, 174, 175, 176 or 177 produced by Chang Chun Plastic Corporation. In some examples, the phenol formaldehyde resin may be commercial products with trademark of ECN 1273, 1280, 1299 or 9511 produced by HUNTSMAN Corporation; commercial products with trademark of NPCN-703 or 704 produced by Nan Ya Plastic Corporation; commercial products with trademark of CNE-202, 220 or 200 series produced by Chang Chun Plastic Corporation; commercial products with trademark of CER-1020, EOCN-1020-62, EOCN-1020, EOCN-102S, EOCN-103S and EOCN-104S produced by Nippon Kayaku Co., Ltd.

In some examples, the naphthalene-based epoxy resin may be commercial products with trademark of VastPoxy-465 produced by Vast-Well Material Development Co., Ltd; commercial products with trademark of Araldite^{®} MY 0816 produced by HUNTSMAN Corporation; commercial products with trademark of EPICLON^{®} HP-5000, HP-4700 or HP-4710 produced by DIC Corporation. In some examples, the aliphatic epoxy resin may be commercial products with trademark of D.E.R. 732 or D.E.R 736 produced by Dow Chemical Company; commercial products with trademark of VastPoxy-4821, 428, 484, 486, 430 produced by Vast-Well Material Development Co., Ltd.

In some examples, the dicyclopentadiene phenol epoxy resin may be commercial products with trademark of HP-7200H produced by Dai Nippon Printing Co., Ltd; commercial products with trademark of XD-1000 produced by Nippon Kayaku Co., Ltd; commercial products with trademark of 655-B-75 produced by Zhe Jiang Derong Chemicals Co., Ltd; commercial products with trademark of KES-7660 produced by Uniwin Chemical Co., Ltd; commercial products with trademark of DNE 260 produced by Chang Chun Plastic Corporation; commercial products with trademark of SEV-3460, SEV-3475, SEV-3408 or SEV-3410 produced by Shin-A T&C Co., Ltd; commercial products with trademark of Tactix^{®} 556 or Tactix^{®} 756 produced by HUNTSMAN Corporation. In some examples, the biphenyl epoxy resin may be commercial products with trademark of Sinepoxy^{®} YX 4000 produced by Sinocure Chemical Co., Ltd; commercial products with trademark of VastPoxy YF-4800 produced by Vast-Well Material Development Co., Ltd; commercial products with trademark of BPNE 3501 produced by Hunan Jiashengde Material Technology Co., Ltd; commercial products with trademark of jER YX4000 produced by Mitsubishi Chemical Company.

In some embodiments, the epoxy resin also includes multifunctional epoxy resin, including a tri-functional epoxy resin and a tetra-functional epoxy resin. In some examples, the tri-functional epoxy resin includes aminophenol, which may be, for example, commercial products with trademark of Araldite^{®} MY 0510, MY 0500, MY 0600, MY 0610 produced by Huntsman Advanced Materials. In some examples, the tetra-functional epoxy resin includes methylenedianiline and tetraglycidyl-4,4'-methylenedianiline, in which the methylenedianiline may be, for example, commercial products with trademark of Araldite^{®} MY 9655 produced by Huntsman Advanced Materials, and the tetraglycidyl-4,4'-methylenedianiline may be commercial products with trademark of Araldite^{®} MY 721, MY 720, MY 725, MY 9663, MY 9634, MY 965 produced by Huntsman Advanced Materials.

In some embodiments, based on a weight of the epoxy resin as 100 wt%, the resin matrix composition includes 0.5 wt% to 30 wt% of the polysulfone engineering plastic, preferably includes 5 wt% to 25 wt%, and more preferably includes 10 wt% to 20 wt%. If added amount of the polysulfone engineering plastic is too less, such as less than 0.5 wt%, the resin matrix with obvious binary phase separation cannot be produced, thereby no significantly increasing mechanical property; if added amount of the polysulfone engineering plastic is greater than 30 wt%, viscosity of the produced resin matrix is too high to be disadvantage for following processing and application, and the mechanical property is also bad. In some embodiments, the polysulfone engineering plastic includes polyethersulfone (PES).

In some examples, the polysulfone engineering plastic may be commercial products with trademark of ULTRASON^{®}S, E, P produced by BASF SE; commercial products with trademark of VW10700RP, VW30500R produced by Solvay Specialty Polymers Japan company; commercial products with trademark of Udel^{®},Veradel^{®}, Eviva^{®}, Radel^{®}, Veriva^{®} and Acudel^{®} produced by Solvay Co., Ltd; commercial products with trademark of 3600G, 4100G, 4800G and 5003P produced by Sumitomo Corporation. It is understood that the aforementioned polysulfone engineering plastic further includes various functional group modified polysulfone engineering plastic, such as sulfonated polysulfone engineering plastic. In some examples, the sulfonated polysulfone engineering plastic may be, for example, commercial products with trademark of S-PES produced by Konishi Chemical Industry Co., Ltd.

In some embodiments, based on a weight of the epoxy resin as 100 wt%, the resin matrix composition includes 0.5 wt% to 20 wt% of the modified polyetherimide, preferably includes 2 wt% to 15 wt%, and more preferably includes 4 wt% to 10 wt%. As a result, the resin matrix composition of the present disclosure can produce the resin matrix with both the island phase and the co-continuous phase to remain binary phase separation through including 0.5 wt% to 20 wt% of the modified polyetherimide and 0.5 wt% to 30 wt% of the polysulfone engineering plastic (based on a weight of the epoxy resin as 100 wt%).

In some embodiments, the modified polyetherimide is polyetherimide-nucleophile modification (PEI-Nu). In other words, the modified polyetherimide is produced by reacting a nucleophile with polyetherimide. In some embodiments, the nucleophile is compounds with nucleophilic group such as a hydroxyl group (-OH), a sulfhydryl group (-SH), a carboxyl group (-COOH) and/or an amine group (-NH₂). It is understood that the nucleophilic group generally indicates functional groups with lone pair electrons. In some examples, the polyetherimide may be commercial products with trademark of RTP 2100 LF produced by RTP Company; commercial products with trademark of 700193, 700207 produced by Sigma-Aldrich Corporation; commercial products with trademark of TECAPEI produced by Ensinger Co., Ltd; commercial products with trademark of PEl produced by Technoform Co., Ltd.

In some embodiments, synthetic method of the modified polyetherimide includes dispersing the polyetherimide in acetone at 60°C, and then the nucleophile is slowly added to react with the polyetherimide for 0.5 hour to 18 hours. After such reaction, it is filtered by a filter paper and repeatedly rinsed by the acetone; hence the modified polyetherimide can be obtained after drying.

In some embodiments, a ratio of amine groups of the amine curing agent to epoxy groups of the epoxy resin is 0.6 to 1.3. In other words, based on the epoxy groups of the epoxy resin as 100%, the amine curing agent included in the resin matrix composition has 60% to 130% of the amine groups. If the amine curing agent added is too less, or the ratio of the amine groups to the epoxy groups is smaller than 0.6, the resin matrix cannot be completely cured. On the contrary, if the amine curing agent added is too much, or the ratio of the amine groups to the epoxy groups is greater than 1.3, the obtained resin matrix would have defects and is unfavorable for the following application. In some embodiments, the amine curing agent includes aliphatic amine curing agent, cycloaliphatic amine curing agent, aromatic amine curing agent, dicyandiamide (DICY) curing agent, amine-terminated polyether curing agent, polyaminoamide curing agent, polyamine curing agent, polyamide curing agent or combinations thereof.

In some examples, the aliphatic amine curing agent includes ethylenediamine, octylamine, 1,3- diaminopropane, 2,2-dimethyl-1,3-propanediamine (neopentanediamine), hexamethylenediamine, diethylenediamine, bis(3-aminopropyl)amine, N,N-bis(3-aminopropyl)methylamine, diethylenetetraamine, diethylenetriamine, tetraethylenepentamine, pentaethylenehexamine, polyethylene-polyamine, 2,2,4-trimethylhexane-1,6-diamine, xylenediamine and bis(aminocyclohexyl)methane. In some examples, the cycloaliphatic amine curing agent includes 1,2-diaminocyclohexane, 1,4-diaminocyclohexane, bis(4-aminocyclohexyl)methane, bis(4-amino-3-methylcyclohexyl)methane, 2,2-bis(4-aminocyclohexyl)propane, 3-(aminomethyl)-3,5,5-trimethylcyclohexan-1-amine (isophoronediamine).

In some examples, the aromatic amine curing agent includes 4-benzylaniline, bis(4-aminophenyl)methane, benzylamine, m-xylylenediamine, 3,3-diaminophenyl sulfone, 4,4-diaminophenyl sulfone. In some examples, the dicyandiamide curing agent includes DICY7 (dicyandiamide, produced by Japan Epoxy resin Co., Ltd.). In some examples, the amine-terminated polyether curing agent includes Jeffamines produced by Huntsman Chemical Co. Ltd., such as commercial good with types of Jeffamine EDR-148, Jeffamine D-230, Jeffamine D-400 or Jeffamine T-403. In some examples, the polyaminoamide curing agent includes polyaminoamide produced by aliphatic polyamine and (octadecadienoic acid) dipolymer or tripolymer.

In some embodiments, the resin matrix composition may optionally include a hardening accelerator according to application requirements. In some embodiments, the hardening accelerator includes an amine-based hardening accelerator, a guanamine-based hardening accelerator, an imidazole-based hardening accelerator and/or a phosphonium-based hardening accelerator. In some examples, the amine-based hardening accelerator includes trialkyl amine such as triethylamine and tributylamine, amine compounds such as 4-dimethylamino pyridine, dimethylbenzylamine, 2,4,6-tris(dimethylaminomethyl)phenol, 1,8-diazabicyclo[5.4.0]undec-7-ene (DBU), dihydrazide (types of AMICURE VDH-J, AMICURE UDH, AMICURE LDH produced by Ajinomoto Co. Inc.), modified polyamine with tertiary amine, modified amine with urea bond, and modified polyamine with imidazole. For example, the modified polyamine with tertiary amine may be commercial products with trademark of PN-23, PN-H, PN-40 produced by Ajinomoto Co. Inc.; commercial products with trademark of FXR-1121 produced by T&K TOKA Co., Ltd.; commercial products with trademark of SUNMIDE LH210 produced by Air Products Japan Inc.; the modified amine with urea bond may be commercial products with trademark of FXR-1020, FXR-1081 produced by T&K TOKA Co., Ltd..

Referring to FIG. 1, FIG. 1 illustrates a flowchart of a method 100 of forming the resin matrix according to some embodiments of the disclosure. The above resin matrix composition may produce the resin matrix by the method 100 of forming the resin matrix to apply in the prepreg and the carbon fiber composite material. First, operation 110 is performed to mix the epoxy resin and the modified polyetherimide at a temperature of 90°C to 130°C to obtain a first solution. If the mixing temperature is lower than 90°C, solubility of the epoxy resin and the modified polyetherimide is bad; but if the mixing temperature is higher than 130°C, a ring opening reaction of the epoxy group within the epoxy resin may occur, or the epoxy resin may be deteriorated due to oxidation. In some embodiments, the epoxy resin may be dissolved and preheated first. In some embodiments, based on a weight of the epoxy resin as 100 wt%, the added modified polyetherimide is 0.5 wt% to 20 wt%. In some embodiments, the modified polyetherimide is formed from ethylenediamine and polyetherimide by reacting at 60°C for 0.5 hour to 18 hours.

Subsequently, operation 120 is performed to mix the first solution and the polysulfone engineering plastic at a temperature of 100°C to 150°C to obtain a second solution. If the mixing temperature is lower than 100°C, mixing effect of the polysulfone engineering plastic and the first solution is bad; if the mixing temperature is higher than 150°C, a ring opening reaction of the epoxy group within the epoxy resin may occur, or the epoxy resin may be deteriorated due to oxidation. It is noted that it is needed to stir at high speed continuously during the mixing process until the obtained second solution becomes transparent and homogeneous. In some embodiments, based on a weight of the epoxy resin as 100 wt%, the added polysulfone engineering plastic is 0.5 wt% to 30 wt%.

Then, operation 130 is performed to add the amine curing agent into the second solution to obtain the resin matrix. In some embodiments, the temperature of the second solution is deceased to 90°C before performing operation 130. It is noted that it is also needed to stir at high speed such that the resin matrix can be mixed homogeneously. Next, the resin matrix can be poured into a mold and is cured at the temperature of 130°C to 230°C, and 130°C to 180°C is preferable.

As described above, the aforementioned resin matrix can have both the island phase and the co-continuous phase. In some embodiments, an average particle size in the island phase of the resin matrix is 300 nm to 2 µm, while an average particle size of a tapeworm-shaped or irregular shape of the co-continuous phase in the resin matrix is 500 nm to 2 µm. When the average particle size of the island phase is within the aforementioned range, the resin matrix can have better flexural strength and is beneficial to toughen; and when the average particle size of the co-continuous phase is within the aforementioned range, it is beneficial to applicability for impregnation of the carbon fiber.

Moreover, the resin matrix produced by the above method has great rheometer dynamic viscosity, thereby having advantage in the impregnation process for the following strengthening carbon fiber prepreg. The physical properties of the carbon fiber composite material produced after carbon fiber prepreg, such as carbon fiber reinforced plastic (CFRP), is obviously related to impregnation effect of the resin prepreg. As a result, if the resin matrix has suitable viscosity to be favorable for fully impregnation of the fiber, and thus the composite may have better physical properties.

The present invention further provides a prepreg, which includes the resin matrix composition described above and the carbon fiber. In some embodiments, the carbon fiber includes polyacrylonitrile (PAN) carbon fiber. The prepreg can be obtained by impregnation of the carbon fiber into the resin matrix produced by the above resin matrix composition. Additionally, the carbon fiber composite material can be obtained by performing a thermoforming process to the prepreg.

### Synthesis example 1

50 g polyetherimide was added into acetone at the temperature of 60°C, and then 0.25 mol (14.95 g) ethylenediamine was slowly added by using a dosing syringe pump to react for 0.5 hr to 18 hrs. Mixture after the reaction was filtered by the filter paper and dried after repeatedly rinsed by the acetone; hence the modified polyetherimide was obtained. In order to avoid the remaining unreacted diethylene diamine, bromocresol green (BCG) can be used to perform examination.

### RESIN MATRIX

### Embodiment 1

Triglycidyl-p-aminophenol (TGPAP), which is the tri-functional epoxy resin, was dissolved and preheated in a beaker. The following adding chemicals were all based on a weight of TGPAP as 100 wt%. First, 4.5 wt% of the modified polyetherimide (PEI-Nu) of the above synthesis example 1 was added and mixed for dissolution at the temperature of 90°C to 130°C. Next, 12 wt% of polyethersulfone (PES) was added and stirred at the temperature of 100°C to 150°C until the obtained solution presented a transparent condition. The temperature of the solution after stirring was decreased to 90°C. 100 wt% of 4,4-diamino diphenyl sulfone as the amine curing agent was added into the solution and stirred for mixing at the temperature of 180°C for 4 hours, thereby obtaining the epoxy resin matrix. Test results of reaction conditions, bending tests, dynamic mechanical analysis (DMA) and fracture toughness (K_{IC}) of the embodiment 1 are shown in table 1. The bending test of the resin matrix was according to rule ASTM D790; DMA was according to rule ASTM D5026; K_{IC} was according to rule ASTM D5045.

### Comparative examples 1-3

Comparative examples 1-3 used the similar process as embodiment 1. Differences are that comparative example 1 didn't mix with thermoplastic compounds; that is, the TGPAP was cured by 4,4-diamino diphenyl sulfone directly; comparative example 2 added 14.94 wt% of the polyethersulfone but didn't add the modified polyetherimide; and comparative example 3 added 14.94 wt% of the modified polyetherimide but didn't add the polyethersulfone. Test results of reaction conditions, bending tests, dynamic mechanical analysis (DMA) and fracture toughness (K_{IC}) of the comparative examples 1-3 are shown in table 1.

**Table 1**

| | | Embodiment 1 | Comparative example 1 | Comparative example 2 | Comparative example 3 |
|---|---|---|---|---|---|
| PEI-Nu (wt%) | | 4.5 | - | - | 14.94 |
| PES (wt%) | | 12 | - | 14.94 | - |
| bending test | modulus (MPa) | 3668 | 3650 | 3586 | 3680 |
| DMA | modulus at 30.5°C (MPa) | 3585 | 3720 | 3410 | 3620 |
| K_{IC} (MPa-m^{1/2}) | | 1.15 | 0.65 | 1.19 | 0.9 |

According to table 1, compared to comparative example 1, which didn't add the thermoplastic engineering plastic completely, modulus of the bedning test and DMA of embodiment 1 and comparative examples 2-3 were all decreased, but K_{IC} was increased. Moreover, compared to significant decreasing in the modulus of comparative example 2, degree of decline in the modulus of embodiment 1 was not great; and compared to comparative example 3 ,whose K_{IC} was only 0.9 MPa-m^{1/2}, difference in K_{IC} between embodiment 1 and comparative example 2 was not great. In other words, the resin matrix of embodiment 1 can remain both great flexural strength and toughness by adding polyethersulfone and the modified polyetherimide.

### Carbon fiber composite

After carbon fiber 3K woven clothes were impregnated in the resin matrix of embodiment 1 and comparative examples 2-3, examination of 0° tensile strength, 0° compressive strength, interlaminar shear strength, in-plane shear strength and processability were performed. The tensile strength test of the composite was according to rule ASTM D3039; the compressive strength test of the composite was according to rule ASTM D6641; the interlaminar shear strength test of the composite was according to rule ASTM D2344; the in-plane shear strength test of the composite was according to rule ASTM D3518. Results of the strength test were shown in table 2.

**Table 2**

| | Embodiment 1 | Comparative example 1 | Comparative example 2 |
|---|---|---|---|
| 0° tensile strength (MPa) | 901 | 779 | 872 |
| 0° compressive strength (MPa) | 665 | 536 | 639 |
| interlaminar shear strength (MPa) | 89.7 | 64.1 | 83 |
| in-plane shear strength (MPa) | 134.1 | 112.4 | 121.9 |

From the above table, the carbon fiber prepreg clothes impregnated by embodiment 1 had greater strength and had better physical properties of the composite material. Moreover, according to the processability test, the viscosity of the resin matrix of embodiment 1 was suitable at an impregnation temperature, and thus impregnation effect of the carbon fiber prepreg clothes was great; contrarily, the viscosity of the resin matrix of comparative example 1 was extremely low at the impregnation temperature, thereby severely overflowing, and thus the resin was shortage within the carbon fiber prepreg clothes and was inhomogeneously dispersed; the viscosity of the resin matrix of comparative example 2 was greater, and thus impregnation effect of the carbon fiber prepreg clothes was bad. In other words, since the carbon fiber prepreg clothes can completely impregnated in the resin matrix of embodiment 1, the physical properties of the composite material can be better.

According to the above embodiments, the present invention provides the resin matrix composition, the prepreg, the carbon fiber composite and the method of forming the resin matrix. The resin matrix with binary phase separation of both the island phase and the co-continuous phase is obtained by adding the polysulfone engineering plastic and the modified polyetherimide into the epoxy resin. The resin matrix with binary phase separation can have both flexibility and toughness, and have suitable impregnation viscosity. Therefore, the resin matrix is suitable for impregnating the carbon fiber to produce the prepreg and the carbon fiber composite.

## Claims

1. A resin matrix composition, comprising:
an epoxy resin;
a polysulfone engineering plastic;
a modified polyetherimide, wherein the modified polyetherimide is formed from a nucleophile and polyetherimide, and the nucleophile has a nucleophilic group comprising a hydroxyl group, a sulfhydryl group, a carboxyl group and/or an amine group; and
an amine curing agent;
wherein a ratio of amine groups of the amine curing agent to epoxy groups of the epoxy resin is 0.6 to 1.3; and
wherein based on a weight of the epoxy resin as 100 wt%, the resin matrix composition comprises 0.5 wt% to 30 wt% of the polysulfone engineering plastic and 0.5 wt% to 20 wt% of the modified polyetherimide.

2. The resin matrix composition of claim 1, further comprising:
a hardening accelerator, wherein the hardening accelerator comprises an amine-based hardening accelerator, a guanamine-based hardening accelerator, an imidazole-based hardening accelerator and/or a phosphonium-based hardening accelerator.

3. The resin matrix composition of claim 1, wherein the epoxy resin comprises bisphenol A epoxy resin, bisphenol F epoxy resin, phenolic epoxy resin, phenol formaldehyde resin, naphthalene-based epoxy resin, aliphatic epoxy resin, dicyclopentadiene phenol epoxy resin, biphenyl epoxy resin, aminophenol, methylenedianiline, tetraglycidyl-4,4'-methylenedianiline or combinations thereof.

4. The resin matrix composition of claim 1, wherein the amine curing agent comprises aliphatic amine curing agent, cycloaliphatic amine curing agent, aromatic amine curing agent, dicyandiamide curing agent, amine-terminated polyether curing agent, polyaminoamide curing agent, polyamine curing agent, polyamide curing agent or combinations thereof.

5. A prepreg, comprising the resin matrix composition of claim 1 and a carbon fiber.

6. A carbon fiber composite material, produced by performing a thermoforming process to the prepreg of claim 5.

7. A method of forming a resin matrix, comprising:
mixing an epoxy resin and a modified polyetherimide at a temperature of 90°C to 130°C to obtain a first solution, wherein based on a weight of the epoxy resin as 100 wt%, a weight of the modified polyetherimide is 0.5 wt% to 20 wt%, wherein the modified polyetherimide is formed from a nucleophile and polyetherimide, and the nucleophile has a nucleophilic group comprising a hydroxyl group, a sulfhydryl group, a carboxyl group and/or an amine group;
mixing the first solution and a polysulfone engineering plastic at a temperature of 100°C to 150°C to obtain a second solution, wherein based on a weight of the epoxy resin as 100 wt%, a weight of the polysulfone engineering plastic is 0.5 wt% to 30 wt%; and
adding an amine curing agent into the second solution to obtain the resin matrix, wherein a ratio of amine groups of the amine curing agent to epoxy groups of the epoxy resin is 0.6 to 1.3.

8. The method of claim 7, wherein the modified polyetherimide is formed from ethylenediamine and polyetherimide.

## Patentansprüche

1. Harzmatrixzusammensetzung, welche umfasst:
ein Epoxidharz;
einen technischen Polysulfon-Kunststoff;
ein modifiziertes Polyetherimid, wobei das modifizierte Polyetherimid aus einem Nukleophil und Polyetherimid gebildet ist, und das Nukleophil eine nukleophile Gruppe aufweist, die eine Hydroxylgruppe, eine Sulfhydrylgruppe, eine Carboxylgruppe und/oder eine Amingruppe umfasst; und
ein Aminhärtungsmittel;
wobei ein Verhältnis von Amingruppen des Aminhärtungsmittels zu Epoxidgruppen des Epoxidharzes 0,6 bis 1,3 beträgt; und
wobei die Harzmatrixzusammensetzung, bezogen auf ein Gewicht des Epoxidharzes als 100 Gew.-%, 0,5 Gew.-% bis 30 Gew.-% des technischen Polysulfon-Kunststoffs und 0,5 Gew.-% bis 20 Gew.-% des modifizierten Polyetherimids umfasst.

2. Harzmatrixzusammensetzung nach Anspruch 1, welche ferner umfasst:
einen Härtungsbeschleuniger, wobei der Härtungsbeschleuniger einen Härtungsbeschleuniger auf Aminbasis, einen Härtungsbeschleuniger auf Guanaminbasis, einen Härtungsbeschleuniger auf Imidazolbasis und/ oder einen Härtungsbeschleuniger auf Phosphoniumbasis umfasst.

3. Harzmatrixzusammensetzung nach Anspruch 1, bei welcher das Epoxidharz Bisphenol-A-Epoxidharz, Bisphenol-F-Epoxidharz, phenolisches Epoxidharz, Phenol-Formaldehyd-Harz, Epoxidharz auf Naphthalinbasis, aliphatisches Epoxidharz, Dicyclopentadien-Phenol-Epoxidharz, Biphenyl-Epoxidharz, Aminophenol, Methylendianilin, Tetraglycidyl-4,4'-methylendianilin oder Kombinationen davon umfasst.

4. Harzmatrixzusammensetzung nach Anspruch 1, bei welcher das Aminhärtungsmittel aliphatisches Aminhärtungsmittel, cycloaliphatisches Aminhärtungsmittel, aromatisches Aminhärtungsmittel, Dicyandiamid-Härtungsmittel, aminterminiertes Polyether-Härtungsmittel, Polyaminoamid-Härtungsmittel, Polyamin-Härtungsmittel, Polyamid-Härtungsmittel oder Kombinationen davon umfasst.

5. Prepreg, welches die Harzmatrixzusammensetzung nach Anspruch 1 und eine Kohlenstofffaser umfasst.

6. Kohlenstofffaserverbundmaterial, das durch Durchführen eines Thermoformungsprozesses mit dem Prepreg nach Anspruch 5 hergestellt ist.

7. Verfahren zur Herstellung einer Harzmatrix, welches umfasst:
Mischen eines Epoxidharzes und eines modifizierten Polyetherimids bei einer Temperatur von 90°C bis 130°C, um eine erste Lösung zu erhalten, wobei, bezogen auf ein Gewicht des Epoxidharzes als 100 Gew.-%, ein Gewicht des modifizierten Polyetherimids 0,5 Gew.-% bis 20 Gew.-% beträgt, wobei das modifizierte Polyetherimid aus einem Nukleophil und Polyetherimid gebildet ist, und das Nukleophil eine nukleophile Gruppe aufweist, die eine Hydroxylgruppe, eine Sulfhydrylgruppe, eine Carboxylgruppe und/ oder eine Amingruppe umfasst;
Mischen der ersten Lösung und eines technischen Polysulfon-Kunststoffs bei einer Temperatur von 100°C bis 150°C, um eine zweite Lösung zu erhalten, wobei, bezogen auf ein Gewicht des Epoxidharzes als 100 Gew.-%, ein Gewicht des technischen Polysulfon-Kunststoffs 0,5 Gew.-% bis 30 Gew.-% beträgt; und
Zugabe eines Aminhärtungsmittels in die zweite Lösung, um die Harzmatrix zu erhalten, wobei ein Verhältnis von Amingruppen des Aminhärtungsmittels zu Epoxidgruppen des Epoxidharzes 0,6 bis 1,3 beträgt.

8. Verfahren nach Anspruch 7, bei welchem das modifizierte Polyetherimid aus Ethylendiamin und Polyetherimid gebildet wird.

## Revendications

1. Composition de matrice de résine, comprenant :
une résine époxy ;
un plastique technique de polysulfone ;
un polyéthérimide modifié, dans laquelle le polyéthérimide modifié est formé à partir d'un nucléophile et d'un polyéthérimide, et le nucléophile présente un groupe nucléophilique comprenant un groupe hydroxyl, un groupe sulfhydryl, un groupe carboxyl et/ou un groupe amine ; et
un agent de durcissement d'amine ;
dans laquelle un rapport de groupes amines de l'agent de durcissement d'amine aux groupes époxy de la résine époxy est de 0,6 à 1,3 ; et
dans laquelle, sur la base d'un poids de la résine époxy étant 100 % en poids, la composition de matrice de résine comprend de 0,5 % en poids à 30% en poids du plastique technique de polysulfone et de 0,5% en poids à 20% en poids du polyéthérimide modifié.

2. Composition de matrice de résine selon la revendication 1, comprenant en outre :
un accélérateur de durcissement, dans laquelle l'accélérateur de durcissement comprend un accélérateur de durcissement à base d'amine, un accélérateur de durcissement à base de guanamine, un accélérateur de durcissement à base d'imidazole et/ou un accélérateur de durcissement à base de phosphonium.

3. Composition de matrice de résine selon la revendication 1, dans laquelle la résine époxy comprend une résine époxy à base de bisphénol A, une résine époxy à base de bisphénol F, une résine époxy phénolique, une résine de phénol formaldéhyde, une résine époxy à base de naphthalène, une résine époxy aliphatique, une résine époxy à base de dicyclopentadiène phénol, une résine époxy à base de biphényl, de l'aminophénol, du méthylènedianiline, du tétraglycidyl-4,4'-méthylènedianiline ou des combinaisons des ceux-ci.

4. Composition de matrice de résine selon la revendication 1, dans laquelle l'agent de durcissement d'amine comprend un agent de durcissement d'amine aliphatique, un agent de durcissement d'amine cycloaliphatique, un agent de durcissement d'amine aromatique, un agent de durcissement de dicyandiamide, un agent de durcissement de polyéther à terminaison d'amine, un agent de durcissement de polyaminoamide, un agent de durcissement de polyamine, un agent de durcissement de polyamide ou des combinaisons de ceux-ci.

5. Préimprégné comprenant la composition de matrice de résine selon la revendication 1 et une fibre de carbone.

6. Matériau composite de fibre de carbone produit en réalisant un processus de thermoformage sur le préimprégné de la revendication 5.

7. Procédé de formation d'une matrice de résine, comprenant :
le mélange d'une résine époxy et d'un polyéthérimide modifié à une température de 90 °C à 130 °C pour obtenir une première solution, dans lequel, sur la base d'un poids de la résine époxy étant 100 % en poids, un poids du polyéthérimide modifié est de 0,5 % en poids à 20 % en poids, dans lequel le polyéthérimide modifié est formé à partir d'un nucléophile et d'un polyéthérimide, et le nucléophile présente un groupe nucléophilique présentant un groupe hydroxyl, un groupe sulfhydryl, un groupe carboxyl et/ou un groupe amine ;
le mélange de la première solution et d'un plastique technique de polysulfone à une température de 100°C à 150 °C pour obtenir une seconde solution, dans lequel, sur la base d'un poids de la résine époxy étant 100 % en poids, un poids du plastique technique de polysulfone est de 0,5 % en poids à 30 % en poids ; et
l'ajout d'un agent de durcissement d'amine dans la seconde solution pour obtenir la matrice de résine, dans lequel un rapport de groupes amines de l'agent de durcissement d'amine aux groupes époxy de la résine époxy est de 0,6 à 1,3.

8. Procédé selon la revendication 7, dans lequel le polyéthérimide modifié est formé à partir d'éthylènediamine et de polyéthérimide.
